# EUROPÄISCHE PATENTSCHRIFT

(11) **EP 1 044 402 B1**
(45) Veröffentlichungstag und Bekanntmachung des Hinweises auf die Patenterteilung: **19.09.2001**
(21) Anmeldenummer: 98965879.4
(22) Anmeldetag: 29.12.1998
(51) Int. Cl.: G06F 3/033, G06F 3/12

(54) **VERFAHREN UND SYSTEM ZUM STEUERN EINER BEDIENEROBERFLÄCHE MIT GRAFIK UND TEXTE ENTHALTENDEN ANZEIGEFELDERN**
METHOD AND SYSTEM FOR CONTROLLING AN OPERATOR INTERFACE WITH DISPLAY FIELDS CONTAINING GRAPHICS AND TEXT
PROCEDE ET SYSTEME POUR ASSURER LA COMMANDE D'UNE INTERFACE OPERATEUR AVEC DES ZONES DE VISUALISATION CONTENANT DES GRAPHIQUES ET DU TEXTE

(30) Priorität: 29.12.1997 DE 19758029
(43) Veröffentlichungstag der Anmeldung: 18.10.2000
(73) Patentinhaber: Océ Printing Systems GmbH, 85586 Poing (DE)
(72) Erfinder: SCHEIDIG, Karola, D-85464 Neufinsing (DE)
(74) Vertreter: Schaumburg, Thoenes & Thurn
(86) Internationale Anmeldenummer: EP9808495
(87) Internationale Veröffentlichungsnummer: WO9934279

(56) Entgegenhaltungen:
- WO-A-90/12358
- US-A- 5 045 880

## Beschreibung

Die Erfindung betrifft ein Verfahren zum Steuern einer Bedieneroberfläche eines computergesteuerten Systems, insbesondere eines Hochleistungsdruckers, bei dem ein Computer ein Bedienfeld-Programm abarbeitet, das eine Bedieneroberfläche auf einem Bildschirm definiert, wobei mehrere Anzeigefelder auf der Bedieneroberfläche vorgesehen sind, die jeweils sowohl Grafikelemente als auch einen Text enthalten. Ferner betrifft die Erfindung ein System zum Steuern einer solchen Bedieneroberfläche.

Um die Bedienung eines computergesteuerten Systems, beispielsweise eines Hochleistungsdruckers, zu erleichtern, enthalten Anzeigefelder neben einem erläuternden Symbol für eine Funktion auch einen erläuternden Text. Während für Länder unterschiedlicher Sprache die Grafik in diesen Anzeigefeldern beibehalten werden kann, ist es für die bessere Verständigung zweckmäßig, den Text in der jeweiligen Sprache anzugeben. Im Stand der Technik wird für jedes Anzeigefeld eine Bitmap erstellt, die Bildpunkte entsprechend dem darzustellenden Anzeigebild zusammen mit dem Text definiert und auf Abruf abgespeichert wird. Wenn nun das computergesteuerte System in viele Länder der Erde verkauft wird, so ist eine sehr große Zahl von Bitmaps bereitzuhalten, welche die vielsprachigen Texte enthalten. Demnach ist für eine solche Lösung ein großer Speicherbedarf erforderlich. Ein weiterer Nachteil liegt darin, daß der Aufbau eines Bildes innerhalb eines Anzeigefeldes bei der heute üblichen relativ hohen Bildpunktdichte trotz schneller Prozessoren relativ lange dauert, so daß der Benutzer einen verringernden Komfort bei der Menüführung hinnehmen muß.

Aus Patent Abstracts of Japan mit Veröffentlichungsnummer JP 07164685 A ist eine Bildausgabeeinrichtung bekannt, bei der auf einem LCD-Display Informationen angezeigt werden. Mithilfe einer Schalteinheit werden Menütexte, die in mehreren Sprachvarianten vorhanden sind, ausgewählt und auf dem Display angezeigt. Abhängig von der gewählten Sprache wird zudem die Größe der Anzeige eingestellt.

Aus IBM Technical Disclosure Bulletin, vol. 37, Nr. 065, June 1994, Seite 461 bis 463, ist ein Verfahren zum Steuern einer Bedieneroberfläche bekannt, bei der eine Bedienperson nach einem Systemstart unter Texten in mehreren Sprachen eine Sprache auswählen kann. Die gewählte Sprache wird in einem Fenster angezeigt, in welchem weitere Informationen über ein Anwendungsprogramm angezeigt werden.

Die WO 94/11804 A1 beschreibt ein User-Interface, welches Statusinformationen eines Druckers anzeigt. Anzuzeigende Texte werden in Textdateien bereitgehalten. Eine computergestütze Ablaufsteuerung greift auf diese Textdateien zu, um diese zur Anzeige zu bringen.

Aus der DE 195 18 367 A1 ist ein Verfahren zum Abspeichern und Wiedergeben eines Vorrats von festen Bildschirmtexten beschrieben. Eine Bedienerführung mithilfe der Bildschirmtexte kann in mehreren Sprachen erfolgen. Textteile, die sprachunabhängig sind, werden mit sprachabhängigen variablen Textteilen zusammengesetzt, um einen Gesamttext auf dem Bildschirm anzeigen zu können.

Weiterhin ist aus in WO 94/27229 A1 eine Bedieneroberfläche beschrieben, bei der auf einem Bildschirm gleichzeitig Textelemente oder Grafikelemente angezeigt werden. Textteile und Grafikteile können in unterschiedlichen Bereichen gespeichert sein und werden bei der Darstellung auf dem Bildschirm zusammengeführt.

Es ist Aufgabe der Erfindung, ein Verfahren und ein System zum Steuern einer Bedieneroberfläche anzugeben, bei dem die in den Anzeigefeldern darzustellenden Grafikelemente und verschiedensprachigen Texte schnell aufgebaut werden und der Speicherbedarf gering ist.

Die Erfindung gibt ein Verfahren zum Steuern einer Bedieneroberfläche eines computergesteuerten Systems an, bei dem ein Computer ein Bedienfeld-Programm abarbeitet, das eine Bedieneroberfläche auf einem Bildschirm definiert, wobei mehrere Anzeigefelder auf der Bedieneroberfläche vorgesehen sind, die jeweils sowohl Grafikelemente als auch einen Text enthalten, bei dem für jedes Anzeigefeld eine Grafik-Bitmap gespeichert ist, die Bildpunkte entsprechend dem darzustellenden Grafikelement enthält, für den Text eines jeden Anzeigefeldes mehrere Sprachvarianten in Textdateien gespeichert sind, abhängig von einem Eingabebefehl für die Texte sämtlicher Anzeigefelder eine einzige Sprache ausgewählt wird, die zu jedem Anzeigefeld gehörende Grafik-Bitmap in den Arbeitsspeicher des Computers geladen wird, und bei dem auf Textdateien der ausgewählten Sprache zugegriffen wird und bei der Anzeige des Anzeigefeldes Text-Bildpunkte und Bildpunkte der Grafik-Bitmap zusammen dargestellt werden.

Gemäß der Erfindung findet also eine Aufteilung der im Anzeigefeld insgesamt anzuzeigenden Bildpunkte statt. Zum einen werden die Bildpunkte durch eine Grafik-Bitmap definiert, die keine Text-Bildpunkte enthält, sondern nur Grafikelemente. Weitere Bildpunkte, die zu den Texten gehören, werden durch den Grafikcontroller erzeugt, dem der jeweilige Text zugeführt wird. Dieser Text ist in mehreren Sprachen in mehreren Textdateien gespeichert. Wenn nun eine bestimmte Sprache ausgewählt wird, so werden im Anzeigefeld die Bildpunkte der Grafik-Bitmap angezeigt und die Text-Bildpunkte gemäß der ausgewählten Textdatei hinzugefügt. Auf diese Weise muß für jedes Anzeigefeld lediglich eine Grafik-Bitmap vorgesehen sein, deren Bildpunkte mit den Bildpunkten der ausgewählten Sprache des Textes zusammengeführt werden. Wenn das Bedienfeld-Programm aktiviert ist und eine Sprachänderung vorgenommen wird, so muß lediglich auf eine neue Textdatei mit der entsprechenden Sprache zugegriffen werden - die Grafik-Bitmap kann beibehalten werden. Auf diese Weise ist auch der Bildaufbau für ein Anzeigefeld beschleunigt, da lediglich die Bildpunkte des Textes mit den bereits vorhandenen Bildpunkten der Grafik-Bitmap zusammengeführt werden müssen.

Bei einem bevorzugten Ausführungsbeispiel der Erfindung werden die Grafik-Bitmaps in einem ROM-Baustein gespeichert. Bei Aufruf eines Menüs der Bedieneroberfläche werden sämtliche Grafik-Bitmaps dieses Menüs in den Arbeitsspeicher geladen und verbleiben dort solange, wie die Anzeigefelder für das Menü und weitere Menüs benötigt werden. Bei einem Sprachwechsel entfallen so Ladevorgänge für die Grafik-Bitmaps und der Bildaufbau kann beschleunigt erfolgen.

Gemäß einem weiteren Aspekt der Erfindung wird ein System zum Steuern einer Bedieneroberfläche eines computergesteuerten Systems angegeben, dessen Merkmale im Anspruch 6 definiert sind. Mit diesem System ergeben sich die bereits in Zusammenhang mit dem erfindungsgemäßen Verfahren beschriebenen Vorteile.

Die Erfindung wird im folgenden weiter unter Bezugnahme auf die Zeichnung erläutert. Darin zeigt:
- Figur 1: eine Bedieneroberfläche herkömmlicher Art mit englischsprachigen Texten,
- Figur 2: eine ähnliche Bedieneroberfläche, wobei die Anzeigefelder noch englischsprachige Texte enthalten, die weiteren Texte jedoch in deutscher Sprache abgefaßt sind,
- Figur 3: schematisch die Bereitstellung von Textdaten und Grafikdaten, und
- Figur 4: Ablaufdiagramme für den Programmstart des Bedienfeldprogramms und für die Sprachumschaltung.

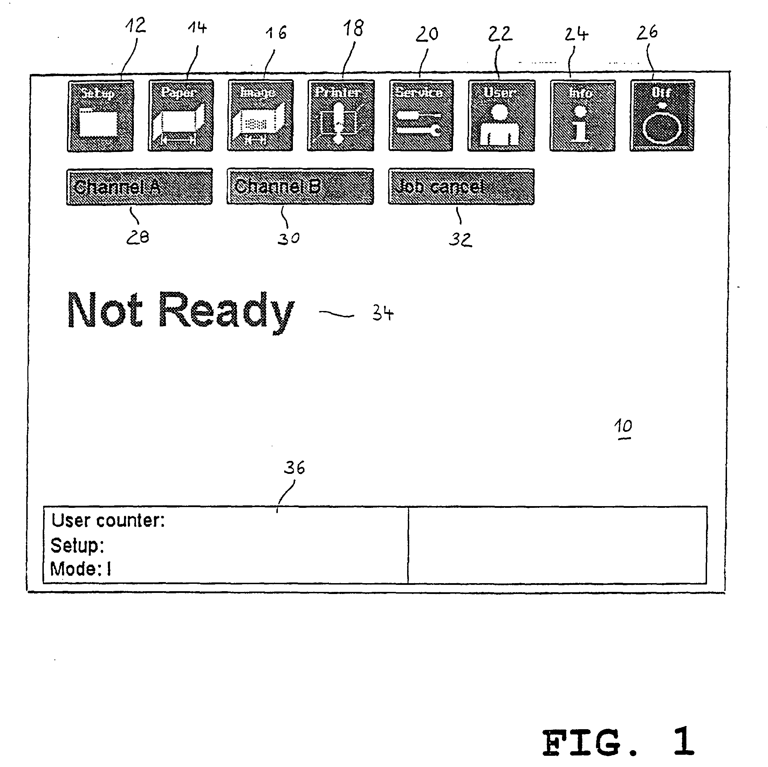

In Figur 1 ist schematisch ein Bildschirm 10 dargestellt, auf welchem ein Bedienfeld-Programm eine Bedieneroberfläche erzeugt. Der Bildschirm 10 ist als TFT-Display ausgebildet, d.h. es handelt sich um einen LCD-Bildschirm, bei dem die einzelnen Bildpunkte durch aufgedampfte transparente horizontale und vertikale Leiterbahnen angesteuert werden. Die für jeden Bildpunkt an den Kreuzungspunkten zusätzlich angeordneten Dünnfilmtransistoren (TFT = Thin Film Transistor) schalten die elektrischen Felder zur Polarisation der anisotropen Flüssigkeit gezielt ein und aus. Auf diese Weise lassen sich optische hoch qualitative Bilder erzeugen.

In einer ersten Zeile des Bildschirms 10 sind Anzeigefelder 12 bis 26 vorhanden, die jeweils ein Grafikelement als auch einen Text enthalten. Der Bildschirm 10 ist ferner als Sensorbildschirm ausgebildet, d.h. den Anzeigefeldern 12 bis 26 sind Berührungssensoren unterlagert, die das Berühren durch einen Stift oder einen Finger erkennen. Bei Betätigen eines der Anzeigefelder 12 bis 26 verzweigt das Bedienfeldprogramm in ein entsprechendes Menü, in welchem der Bediener verschiedene Parameter eingeben kann, in welchem Informationen angezeigt werden (Anzeigefeld 24) oder über das das computergesteuerte System, im vorliegenden Fall ein Hochleistungsdrucker, in den Aus-Zustand geschaltet werden kann (Anzeigefeld 26). Die Anzeigefelder 12 bis 26 enthalten als Grafikelemente Symbole, die auf die Funktion des durch das Bedienfeld-Programm aufgerufenen Menüs hinweisen.

Unterhalb der Anzeigefelder 12 bis 26 sind rechteckförmige Anzeigen 28, 30, 32 vorgesehen, die ausschließlich Texte enthalten. Weiterhin wird ein Textfeld 34 angezeigt, welches auf den Zustand des Hochleistungsdruckers hinweist. Im unteren Bildteil des Bildschirms 10 ist ein Parameterfeld 36 angegeben, welches Betriebsparameter anzeigt. Wie der Figur 1 zu entnehmen ist, sind sämtliche Texte, die auf dem Bildschirm 10 angezeigt werden, in englischer Sprache gehalten. Es ist jedoch wünschenswert, daß je nach Aufstellungsort des Hochleistungsdruckers die Texte in der am Ort herrschenden Sprache angezeigt werden.

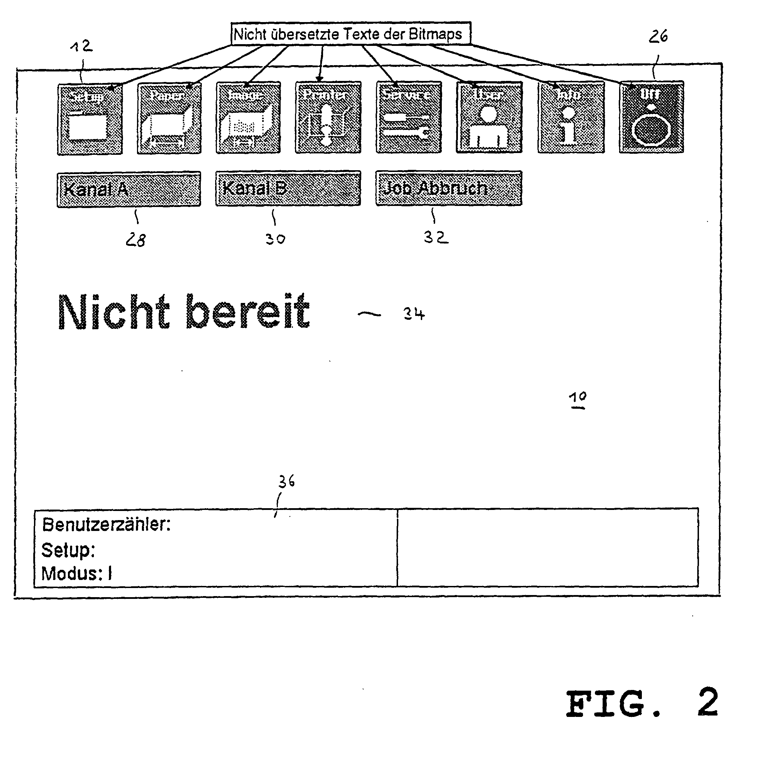

Figur 2 zeigt eine Version der Bedieneroberfläche, in welcher die Texte in den Abschnitten 28 bis 36 auf deutsch angezeigt werden. Eine solche Darstellung ist relativ einfach zu bewerkstelligen, da die Anzeige von Texten mithilfe des Grafik-Controllers relativ schnell zu bewerkstelligen ist, wobei auf entsprechende Textdateien zugegriffen wird. Es ist jedoch zu erkennen, daß in den Anzeigefeldern 12 bis 26 die Textelemente weiterhin in englischer Sprache sind, da es relativ schwierig ist, in Bildern mit Grafikelementen nur den Textanteil abzuändern. Für den Bediener ist daher bei einer Anzeige nach Figur 2 der Komfort verringert, da er das Menü in zwei Sprachen lesen muß.

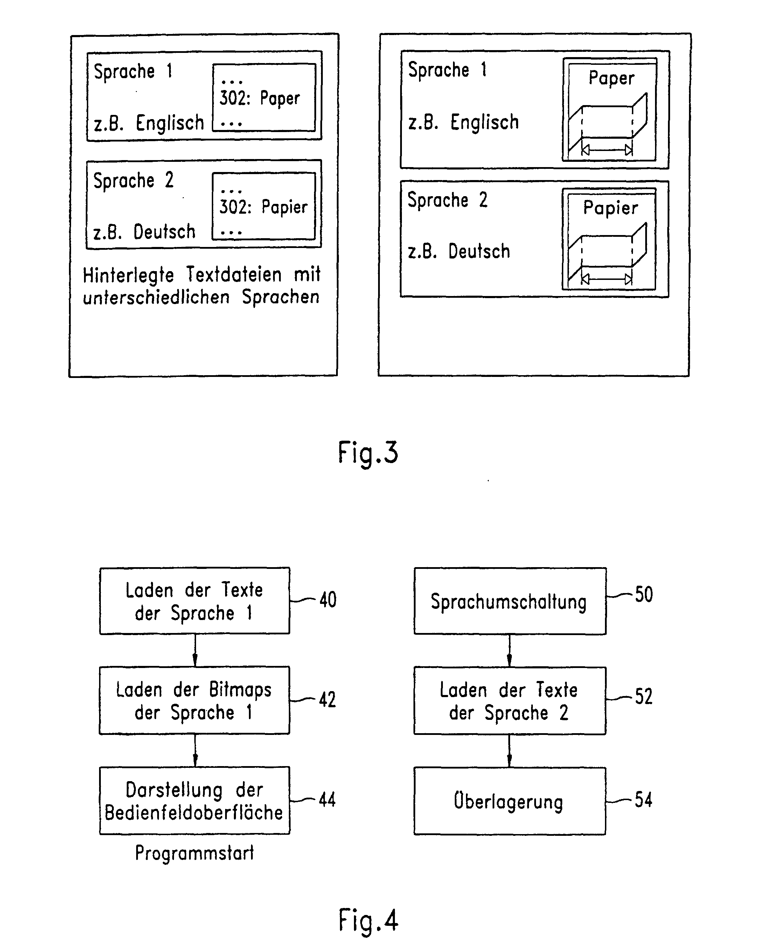

Figur 3 zeigt im linken Bildteil die Bereitstellung von Textdateien mit unterschiedlichen Sprachen. Jede Textdatei mit gleichen Informationen, beispielsweise mit dem Begriff "Paper" erhält dieselbe Zugriffsnummer, z.B. 302. Wenn nun der Bediener eine Sprache auswählt, beispielsweise Englisch oder Deutsch, so wird auf die Textdatei derselben Nummer, im vorliegenden Fall der Nummer 302 zugegriffen und dieser Text in das Anzeigefeld zusammen mit der Grafik dargestellt. Im rechten Bildteil ist zu erkennen, daß bei der gewählten Sprache Englisch zum Grafikteil, welcher eine Papierbahn darstellt, der Text "Paper" aus der entsprechenden Textdatei mit Nummer 302 eingeblendet wird. Darunter ist das Anzeigefeld mit der Sprache Deutsch zu sehen. Es wird ebenfalls auf die Textdatei mit Nummer 302 zugegriffen. Aufgrund der festgelegten Sprache Deutsch wird der Begriff "Papier" auf dem Anzeigefeld angezeigt. Zu beachten ist, daß der Grafikteil nicht neu geladen werden muß, sondern unverändert bleibt. Es wird lediglich der jeweilige Text in der gewählten Sprache neu eingeblendet.

Figur 4 zeigt Ablaufdiagramme beim Programmstart und bei einer Änderung der Sprache. Gemäß Schritt 40 werden zunächst die Texte entsprechend der gewählten Sprache 1 in den Arbeitsspeicher geladen. Anschließend werden die Grafik-Bitmaps für die verschiedenen Anzeigefelder geladen (Schritt 42) und im Schritt 44 werden sämtliche Anzeigefelder auf dem Bildschirm angezeigt, d.h. Texte und Grafik-Bitmaps werden überlagert und zusammen dargestellt.

Im rechten Bildteil sind Ablaufschritte 50 bis 54 dargestellt, wie sie bei einer Änderung der Sprache angewendet werden. Im Schritt 50 wird z.B. von der Sprache 1 auf die Sprache 2 gewechselt. Dieses Wechseln erfolgt mithilfe von Eingaben des Benutzers nach Aufruf des Anwendungsmenüs, d.h. nach dem Berühren des Anzeigefeldes 22 wird ein Anwendungsmenü aufgerufen und von dort in ein Sprachumschalte-Menü verzweigt. Gemäß Schritt 52 werden die in den Textdateien abgespeicherten Texte der neu gewählten Sprache 2 in den Arbeitsspeicher geladen. Diese Texte werden nach Wandlung in Bildpunkte durch den Grafikcontroller zusammen mit den Grafik-Bitmaps, die noch im Arbeitsspeicher verblieben sind, zusammen dargestellt, wobei für die Darstellung im allgemeinen die Fenstertechnik angewendet wird.

### Bezugszeichenliste

- 10: Bildschirm
- 12 - 26: Anzeigefelder
- 28 - 32: Anzeigen
- 34: Textfeld
- 36: Parameterfeld
- 40 - 54: Verfahrensschritte

## Patentansprüche

1. Verfahren zum Steuern einer Bedieneroberfläche eines computergesteuerten Systems, insbesondere eines Hochleistungsdruckers,
bei dem ein Computer ein Bedienfeld-Programm abarbeitet, das eine Bedieneroberfläche auf einem Bildschirm (10) definiert, wobei mehrere Anzeigefelder (12 - 26) auf der Bedieneroberfläche vorgesehen sind, die jeweils sowohl Grafikelemente als auch einen Text enthalten,
bei dem für jedes Anzeigefeld (12 - 26) eine Grafik-Bitmap gespeichert ist, die Bildpunkte entsprechend dem darzustellenden Grafikelement enthält,
für den Text eines jeden Anzeigefeldes (12 - 26) mehrere Sprachvarianten in Textdateien (z.B. Nr. 302) gespeichert sind,
abhängig von einem Eingabebefehl für die Texte sämtlicher Anzeigefelder (12 - 26) eine einzige Sprache ausgewählt wird,
die zu jedem Anzeigefeld (12 - 26) gehörende Grafik-Bitmap in den Arbeitsspeicher des Computers geladen wird,
und bei dem auf Textdateien der ausgewählten Sprache zugegriffen wird und bei der Anzeige des Anzeigefeldes (12 - 26) Text-Bildpunkte und Bildpunkte der Grafik-Bitmap zusammen dargestellt werden.

2. Verfahren nach Anspruch 1, **dadurch gekennzeichnet, daß** die Grafik-Bitmaps in einem ROM-Baustein gespeichert werden und bei Aufruf eines Menüs der Bedieneroberfläche sämtliche Grafik-Bitmaps dieses Menüs in den Arbeitspeicher geladen werden und dort verbleiben, so lange die Anzeigefelder für das Menü und weitere Menüs benötigt werden.

3. Verfahren nach Anspruch 1 oder 2, **dadurch gekennzeichnet, daß** als Bildschirm (10) ein Sensorbildschirm verwendet wird, und daß das Bedienfeld-Programm bei Berührung eines der Anzeigefelder (12 - 26) zu einem Eingabe-Menü verzweigt, in welchem ein Benutzer Informationen eingibt.

4. Verfahren nach Anspruch 3,**dadurch gekennzeichnet, daß** ausgehend von einem Ausgangsmenü ein Anwendungs-Untermenü durch Betätigen eines Anzeigefeldes aufgerufen wird, in welchem die Sprache ausgewählt wird.

5. Verfahren nach einem der vorhergehenden Ansprüche, **dadurch gekennzeichnet, daß** bei einem Wechsel der Sprache der neue Text aus der zugehörigen Textdatei ausgelesen wird und an Stelle des bisherigen Textes angezeigt wird, ohne die Grafik-Bitmap des betreffenden Anzeigefeldes zu ändern.

6. System zum Steuern einer Bedieneroberfläche eines Personal Computers, insbesondere in einem Hochleistungsdrucker,
bei dem der Personal Computer ein Bedienfeld-Programm abarbeitet, das eine Bedieneroberfläche auf einem Bildschirm (10) definiert, wobei mehrere Anzeigefelder (12 - 26) auf der Bedieneroberfläche vorgesehen sind, die jeweils sowohl Grafikelemente als auch einen Text enthalten,
bei dem für jedes Anzeigefeld (12 - 26) eine Grafik-Bitmap gespeichert ist, die Bildpunkte entsprechend dem darzustellenden Grafikelement enthält,
für den Text eines jeden Anzeigefeldes (12 - 26) mehrere Sprachvarianten in Textdateien (z.B. Nr. 302) gespeichert sind,
abhängig von einem Eingabebefehl für die Texte sämtlicher Anzeigefelder (12 - 26) eine einzige Sprache ausgewählt wird,
die zu jedem Anzeigefeld (12 - 26) gehörende Grafik-Bitmap in den Arbeitsspeicher des Computers geladen wird,
und bei dem auf Textdateien der ausgewählten Sprache zugegriffen wird und bei der Anzeige des Anzeigefeldes (12 - 26) Text-Bildpunkte und Bildpunkte der Grafik-Bitmap zusammen dargestellt werden.

7. System nach Anspruch 6, **dadurch gekennzeichnet, daß** die Grafik-Bitmaps in einem ROM-Baustein gespeichert werden und bei Aufruf eines Menüs der Bedieneroberfläche sämtliche Grafik-Bitmaps dieses Menüs in den Arbeitspeicher geladen werden und dort verbleiben, so lange die Anzeigefelder für das Menü und weitere Menüs benötigt werden.

8. System nach Anspruch 6 oder 7, **dadurch gekennzeichnet, daß** als Bildschirm (10) ein Sensorbildschirm verwendet wird, und daß das Bedienfeld-Programm bei Berührung eines der Anzeigefelder (12 - 26) zu einem Eingabe-Menü verzweigt, in welchem ein Benutzer Informationen eingibt.

9. System nach Anspruch 8,**dadurch gekennzeichnet, daß** ausgehend von einem Ausgangsmenü ein Anwendungs-Untermenü durch Betätigen eines Anzeigefeldes aufgerufen wird, in welchem die Sprache ausgewählt wird.

10. System nach einem der vorhergehenden Ansprüche 6 bis 9, **dadurch gekennzeichnet, daß** bei einem Wechsel der Sprache der neue Text aus der zugehörigen Textdatei ausgelesen wird und an Stelle des bisherigen Textes angezeigt wird, ohne die Grafik-Bitmap des betreffenden Anzeigefeldes zu ändern.

## Claims

1. Method of controlling an operator interface of a computer-aided system, in particular a high performance printer,
in which a computer executes an operating panel programme which defines an operator interface on a monitor (10), a plurality of display fields (12-16) being provided on the operator interface, each containing both graphic elements and text,
in which, for each display field (12-26), a graphic bit map is stored which contains pixels corresponding to the graphic element to be displayed,
for the text of each display field (12-26), a plurality of language variants are stored in text files (e.g. No. 302),
depending on an input command, a single language is selected for the text in all the display fields (12-26),
the graphic bit map belonging to each display field (12-26) is loaded into the working memory of the computer,
and in which access is made to text files of the selected language and, when a display field (12-26) is displayed, text pixels and pixels from the graphic bit map are displayed together.

2. Method according to Claim 1, **characterized in that** the graphic bit maps are stored in a ROM module and, when a menu on the operator interface is called, all the graphic bit maps belonging to this menu are loaded into the working memory and remain there as long as the display fields are needed for the menu and further menus.

3. Method according to Claim 1 or 2, **characterized in that** the monitor (10) used is a sensor monitor, and in that when one of the display fields (12-26) is touched, the operating panel programme branches to an input menu in which a user inputs information.

4. Method according to Claim 3, **characterized in that**, starting from a starting menu, a user submenu is called by operating a display field, in which the language is selected.

5. Method according to one of the preceding claims, **characterized in that** in the event of a change of the language, the new text is read out of the associated text file and is displayed instead of the previous text, without changing the graphic bit map of the relevant display field.

6. System for controlling an operator interface of a personal computer, in particular in a high performance printer,
in which the personal computer executes an operating panel programme which defines an operator interface on a monitor (10), a plurality of display fields (12-26) being provided on the operator interface, each containing both graphic elements and text,
in which, for each display field (12-26), a graphic bit map is stored, which contains pixels corresponding to the graphic element to be displayed,
for the text in each display field (12-26), a number of language variants are stored in text files (e.g. No. 302),
depending on an input command, a single language is selected for the text in all the display fields (12-26),
the graphic bit map belonging to each display field (12-26) is loaded into the working memory of the computer,
and in which access is made to text files in the selected language and, when the display field (12-26) is displayed, text pixels and pixels belonging to the graphic bit map are displayed together.

7. System according to Claim 6, **characterized in that** the graphic bit maps are stored in a ROM module and, when a menu on the operator interface is called, all the graphic bit maps belonging to this menu are loaded into the working memory and remain there as long as the display fields are needed for the menu and further menus.

8. System according to Claim 6 or 7, **characterized in that** the monitor (10) used is a sensor monitor, and in that when one of the display fields (12-26) is touched, the operating panel programme branches to an input menu in which a user inputs information.

9. System according to Claim 8, **characterized in that**, starting from a starting menu, a user submenu is called by operating a display field, in which the language is selected.

10. System according to one of the preceding claims 6 to 9, **characterized in that** in the event of a change of the language, the new text is read out of the associated text file and is displayed instead of the previous text, without changing the graphic bit map of the relevant display field.

## Revendications

1. Procédé pour assurer la commande d'une interface opérateur d'un système commandé par ordinateur, en particulier un appareil d'impression à grande vitesse,
dans lequel un ordinateur lance un programme de commande qui définit une interface opérateur sur un écran de présentation (10), plusieurs zones d'affichage (12-26) étant prévues sur l'interface opérateur qui comportent chacune un élément graphique ainsi qu'un texte,
dans lequel est mémorisée une image Bitmap, associée à chaque zone d'affichage (12-26), qui comporte des éléments d'image correspondant à l'élément graphique à représenter,
dans lequel sont mémorisées des données textuelles en plusieurs langues (par exemple n° 302) associées au texte de chaque zone d'affichage (12-26),
dans lequel une seule langue est choisie pour le texte de l'ensemble des zones d'affichage (12-26) en fonction d'un ordre d'entrée,
dans lequel l'image Bitmap associée à chaque zone d'affichage (12-26) est chargée dans la mémoire de travail de l'ordinateur,
et dans lequel on effectue la saisie des données textuelles dans la langue choisie et, lorsque l'on visualise la zone d'affichage (12-26), des éléments d'image associés au texte et des éléments d'image associés à l'image Bitmap sont présentés ensemble.

2. Procédé selon la revendication 1, **caractérisé en ce que** les images Bitmap sont mémorisées dans un composant ROM et, lorsque l'on appelle un menu de l'interface opérateur, l'ensemble des images Bitmap de ce menu est chargé dans la mémoire de travail et y reste tant que l'on a besoin des zones d'affichage pour le menu ou pour d'autres menus.

3. Procédé selon la revendication 1 ou 2, **caractérisé en ce qu'**un écran interactif au toucher est utilisé comme écran de présentation (10), et en ce que, lorsque l'on touche l'une des zones d'affichage (12-26), le programme de commande se branche à un menu d'entrée dans lequel un utilisateur entre des informations.

4. Procédé selon la revendication 3, **caractérisé en ce qu'**un sous-menu d'utilisation est appelé à partir d'un menu principal en activant une zone d'affichage, sous-menu dans lequel la langue est choisie.

5. Procédé selon l'une des revendications précédentes, **caractérisé en ce que**, lorsque l'on change de langue, le nouveau texte est obtenu à partir des données textuelles associées, et est affiché à la place du texte précédent sans modifier l'image Bitmap de la zone d'affichage concernée.

6. Système pour commander une interface opérateur d'un ordinateur personnel, en particulier dans un appareil d'impression à grande vitesse,
dans lequel l'ordinateur lance un programme de commande qui définit une interface opérateur sur un écran de présentation (10), plusieurs zones d'affichage (12-26) étant prévues sur l'interface opérateur qui comportent chacune un élément graphique ainsi qu'un texte,
dans lequel est mémorisée une image Bitmap, associée à chaque zone d'affichage (12-26), qui comporte des éléments d'image correspondant à l'élément graphique à représenter,
dans lequel sont mémorisées des données textuelles en plusieurs langues (par exemple n° 302) associées au texte de chaque zone d'affichage (12-26),
dans lequel une seule langue est choisie pour le texte de l'ensemble des zones d'affichage (12-26) en fonction d'un ordre d'entrée,
dans lequel l'image Bitmap associée à chaque zone d'affichage (12-26) est chargée dans la mémoire de travail de l'ordinateur,
et dans lequel on effectue la saisie des données textuelles dans la langue choisie et, lorsque l'on visualise la zone d'affichage (12-26), des éléments d'image associés au texte et des éléments d'image associés à l'image Bitmap sont présentés ensemble.

7. Système selon la revendication 6, **caractérisé en ce que** les images Bitmap sont mémorisées dans un composant ROM et, lorsque l'on appelle un menu de l'interface opérateur, l'ensemble des images Bitmap de ce menu est chargé dans la mémoire de travail et y reste tant que l'on a besoin des zones d'affichage pour le menu ou pour d'autres menus.

8. Système selon la revendication 6 ou 7, **caractérisé en ce qu'**un écran interactif au toucher est utilisé comme écran de présentation (10), et en ce que, lorsque l'on touche l'une des zones d'affichage (12-26), le programme de commande se branche à un menu d'entrée dans lequel un utilisateur entre des informations.

9. Système selon la revendication 8, **caractérisé en ce qu'**un sous-menu d'utilisation est appelé à partir d'un menu principal en activant une zone d'affichage, sous-menu dans lequel la langue est choisie.

10. Système selon l'une des revendications précédentes, **caractérisé en ce que**, lorsque l'on change de langue, le nouveau texte est obtenu à partir des données textuelles associées, et est affiché à la place du texte précédent sans modifier l'image Bitmap de la zone d'affichage concernée.
